# EUROPEAN PATENT SPECIFICATION

(11) **EP 2 599 610 B1**
(45) Date of publication and mention of the grant of the patent: **17.01.2018**
(21) Application number: 11812539.2
(22) Date of filing: 27.07.2011
(51) Int. Cl.: B29C 49/64, B29C 49/18, B29C 31/00, B29C 49/10, B65B 35/00, B65D 1/02, B65B 3/02, B29C 49/66, B29C 49/42, B65D 65/38, B65D 85/72, B29L 22/00, B29C 49/06, B29L 31/00, B29K 667/00

(54) **HOT-FORMING DEVICE FOR A HEAT-RESISTANT CONTAINER**
HEISSFORMUNGSVORRICHTUNG FÜR EINEN HITZEBESTÄNDIGEN BEHÄLTER
DISPOSITIF DE MOULAGE À CHAUD POUR UN RÉCIPIENT RÉSISTANT À LA CHALEUR

(30) Priority: 27.07.2010 JP 2010168500
(43) Date of publication of application: 05.06.2013
(73) Proprietor: Nissei ASB Machine Co., Ltd., Komoro-shi, Nagano-ken 384-8585 (JP)
(72) Inventor: YANAGISAWA Atsushi, Nagano-ken 384-8585 (JP)
(74) Representative: Wunderlich, Rainer
(86) International application number: PCT/JP2011/067156
(87) International publication number: WO 2012/014950

(56) References cited:
- EP-A1- 0 593 033
- WO-A1-2010/070846
- JP-A- H1 158 505
- JP-A- 11 034 152
- JP-A- 2006 527 672
- JP-A- 2011 037 139
- JP-B2- 3 760 045
- JP-B2- 3 760 045

## Description

### Technical Field

The present invention relates to a heat molding device for a heat-resistant container, which is configured to form the heat-resistant container by heat-treating and molding a primary blow-molded article obtained by primary blow-molding a preform made of polyethylene terephthalate (PET) resin.

### Background Art

Conventionally, for example, a heat-resistant container having heat resistance has been employed as a returnable container for mineral water or the like. The returnable container for the mineral water or the like is generally recovered from consumers after being used and is washed (hot-water washed) by washing liquid heated to a temperature of approximately 65°C. In this manner, the returnable container can be reused multiple times. For this reason, a heat-resistant container made of polycarbonate resin, etc. having high heat resistance is suitably used as the returnable container. Meanwhile, as the returnable container for mineral water, a relatively large-scale container of 3 gallons to 5 gallons (about 12 liters to 20 liters), for example, is often employed all over the world.

However, in recent years, it has been confirmed that environmental hormones are eluted from the container made of the polycarbonate resin. This has become a worldwide problem and it is required to use a resin material with no risk of elution of the environmental hormones, as a material of a heat-resistant container such as the above-described returnable container. For example, there is no problem of the environmental hormones in PET resin used as a material of a small container or the like for beverage. Accordingly, it is studied to use the PET resin as the material of the heat-resistant container.

However, the container made of the PET resin generally has a low heat resistance and thus there is a risk that the container is deformed (shrunk) even by the hot-water washing as mentioned above, for example. For this reason, the PET resin has not been employed as the material of the heat-resistance container such as the returnable container.

In this regard, a method for improving the heat resistance of the PET resin container has been suggested in recent years. For example, a so-called two-blowing or three-blowing type molding device has been suggested in which a heat-treatment, blowing and a final blowing are carried out in a separate mold (for example, see Patent Document I).

### Citation List

### Patent Literature

Patent Document 1: Japanese Patent Publication No. 3760045. Patent application EP 0 593 033 discloses a device, which is configured to form a heat-resistant container by heat-treating and molding a primary blow-molded article obtained by primary blow-molding a preform made of polyethylene terephthalate resin, the heat molding device comprising:
a conveyance unit,
a heat treating station configured to obtain an intermediate molded article by bringing the primary blow-molded article conveyed from the mounting station by the conveyance unit into contact with a heated heat treating mold and thus heat treating and molding the primary blow-molded article;
a final blow-molding station configured to obtain a heat-resistant container having a predetermined shape by final blow-molding the intermediate molded article conveyed from the heat treating station by the conveyance unit in a state where the intermediate molded article is brought into contact with a heated final blow-molding mold;
and a collecting station configured to collect the heat-resistant container conveyed from the final blow-molding station by the conveyance unit by removing the heat-resistant container from the conveyance unit.

### Summary of the Invention

### Technical Problem

According to the molding device as described above, it is possible to produce a heat-resistant container made of PET resin with improved heat resistance. However, since the molding device is configured to produce a heat-resistant container which is a final product from a preform in a series of processes, the molding device is very large and also very expensive. Further, as the container becomes larger, the molding device also becomes larger and thus the price becomes greater.

Accordingly, a material having a high heat resistance such as polycarbonate resin is generally used as the material of a heat-resistant container and the use of a heat-resistant container made of PET resin has not widespread yet. In particular, the use of a large-scale heat-resistant container made of PET resin has not widespread. That is, as a manufacturing device for a heat-resistant container, a so-called one blowing type molding device is often employed in general.

The present invention has been made to solve the above-described problems and an object of the present invention is to provide a heat molding device for a heat-resistant container, which is capable of producing the heat-resistant container made of PET resin at a relatively low cost using an existing molding device.

### Solution to Problem

A first aspect of the present invention to solve the problem is a heat molding device for a heat-resistant container, which is configured to form the heat-resistant container by heat-treating and molding a primary blow-molded article obtained by primary blow-molding a preform made of polyethylene terephthalate resin, the heat molding device including: a mounting station configured to mount the primary blow-molded article on a conveyance unit provided so as to be moveable linearly by lifting a table on which the primary blow-molded article is placed, fitting a positioning pin to an opening of a neck part of the primary blow-molded article, and grasping an outer periphery portion of the neck part by a grasping unit in a state where the primary blow-molded article is positioned; a heat treating station configured to obtain an intermediate molded article by bringing the primary blow-molded article conveyed from the mounting station by the conveyance unit into contact with a heated heat treating mold and thus heat treating and molding the primary blow-molded article; a final blow-molding station configured to obtain a heat-resistant container having a predetermined shape by final blow-molding the intermediate molded article conveyed from the heat treating station by the conveyance unit in a state where the intermediate molded article is brought into contact with a heated final blow-molding mold; and a collecting station configured to collect the heat-resistant container conveyed from the final blow-molding station by the conveyance unit by removing the heat-resistant container from the conveyance unit.

According to the first aspect of the present invention, it is possible to manufacture a heat-resistant container at a relatively low cost from a primary blow-molded article made of PET resin, which is formed by an existing injection stretch blow-molding device.

A second aspect of the present invention is the heat molding device for a heat-resistant container according to the first aspect, wherein the heat treating mold and the final blow-molding mold are arranged in parallel in a direction substantially perpendicular to a clamping direction of the molds.

According to the second aspect, it is possible to reduce the size of the heat molding device and therefore it is possible to install the heat molding device even in a relatively small space.

A third aspect of the present invention is the heat molding device for a heat-resistant container according to the first or second aspect, wherein the grasping unit includes three first to third grasping members fixed to a guide member at predetermined intervals from the mounting station side, and wherein, when the first grasping member reciprocates between the mounting station and the heat treating station, the second grasping member is configured to reciprocate between the heat treating station and the final blow-molding station and the third grasping member is configured to reciprocate between the final blow-molding station and the collecting station.

According to the third aspect, it is possible to further reduce the size of the heat molding device and therefore it is possible to install the heat molding device even in a relatively small space.

A fourth aspect of the present invention is the heat molding device for a heat-resistant container according to any one of the first to third aspects, wherein the grasping unit includes a pair of arms which can be pivoted by one end side thereof being a pivot point, and the outer periphery portion of the neck part is grasped between the pair of arms.

According to the fourth aspect, it is possible to simplify the structure of the conveyance unit including the grasping unit and therefore it is possible to reduce the size of the heat molding device and to achieve cost reduction.

A fifth aspect of the present invention is the heat molding device for a heat-resistant container according to the fourth aspect, wherein the conveyance unit further includes a restriction unit for restricting the opening of the pair of arms by being engaged with an outer side of the pair of arms grasping the neck part.

According to the fifth aspect, it is possible to reliably grasp the neck part by the arms and therefore it is possible to prevent positional deviation or falling phenomenon, etc. from occurring.

The sixth aspect of the present invention is the heat molding device for a heat-resistant container according to any one of the first to fifth aspects, wherein the heat treating station and the final blow-molding station include first and second clamping unit for respectively clamping each of a pair of split molds configuring the heat-treating mold or the final blow-molding mold in a state where both split molds contact with each other, and wherein a first frame with the first clamping unit fixed thereto and a second frame with the second clamping unit fixed thereto are integrated via a connection frame provided at an upper end portion of the first and second frames.

According to the sixth aspect, rigidity of the first and second frames is increased. Accordingly, it is possible to firmly clamp the heat treating mold and the final blow-molding mold by clamping the heat treating mold and the final blow-molding mold at a relatively high pressure by the first and the second clamping unit.

### Advantage of the Invention

According to the heat molding device of the present invention described above, it is possible to manufacture a heat-resistant container made of PET resin at a relatively low cost using an existing molding device. That is, the heat molding device can form a heat-resistant container from a primary blow-molded article which is molded by an existing molding device and therefore it is possible to suppress capital investment to the minimum. Further, the heat molding device is compact and therefore can be installed even in a relatively small space.

In particular, the heat molding device of the present invention is suitably used for manufacturing a heat-resistant container which is suitably used as a large returnable bottle for mineral water, having capacity of about 3 gallons to 5 gallons (about 12 liters to 20 liters), for example.

### Brief Description of the Drawings

Fig. 1 is a partial sectional view showing an example of a heat-resistant container.
Fig. 2 is a view showing a molded article obtained in each process of a heat-resistant container manufacturing method.
Fig. 3 is a block diagram showing a schematic configuration of a heat-resistant container manufacturing device.
Fig. 4 is a schematic view showing a heat treating device according to an embodiment of the present invention.
Fig. 5 is an arrow view for explaining a conveyance unit according to an embodiment of the present invention.
Figs. 6 (a) and (b) are plan views for explaining a chuck which configures the heat treating device according to an embodiment of the present invention.
Figs. 7 (a) and (b) are schematic views for explaining a mounting station according to an embodiment of the present invention.
Fig. 8 is a schematic sectional view for explaining a configuration of a heat treating station according to an embodiment of the present invention.
Figs. 9 (a) and (b) are partial sectional views for explaining a configuration of a blow core mold according to an embodiment of the present invention.
Fig. 10 is an arrow view for explaining a frame structure of the heat treating station according to an embodiment of the present invention.
Fig. 11 is a schematic sectional view for explaining a configuration of a final blow-molding station according to an embodiment of the present invention.
Fig. 12 is a plan view for explaining a modification of the conveyance unit according to an embodiment of the present invention.
Fig. 13 is a plan view for explaining a modification of the conveyance unit according to an embodiment of the present invention.

### Description of Embodiments

Hereinafter, an embodiment of the present invention will be described with reference to the accompanying drawings.

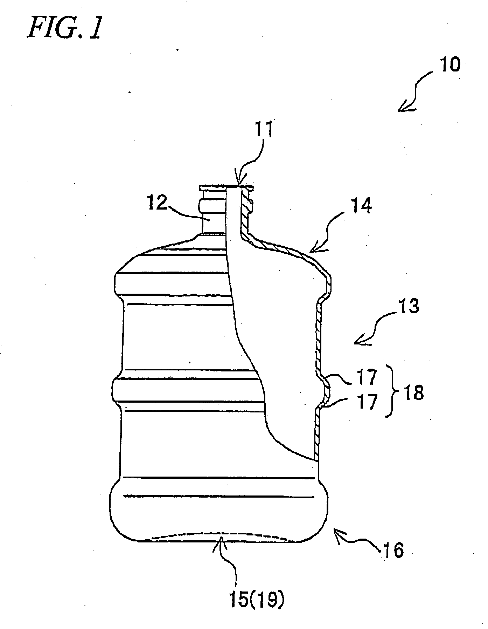

A heat-resistant container 10 shown in Fig. 1 is formed from polyethylene terephthalate (PET) resin and is used as, for example, a returnable bottle for mineral water, which has capacity of about 3 gallons to 5 gallons (about 12 liters to 20 liters). The heat-resistant container 10 which is a large-scale returnable container includes a neck part 12 having an outer diameter of, for example, about 40 mm to 60 mm and including an opening 11 at an upper end, a cylindrical body part 13 having a maximum diameter of, for example, about 270 mm to 300 mm, a shoulder part 14 connecting the neck part 12 and the body part 13 and gradually enlarged from the neck part 12, a bottom part 15 sealing one end of the body part 13 and a heel part 16 connecting the body part 13 and the bottom part 15.

The body part 13 is formed with a reinforcing portion 18 configured by a plurality of annular inclined portions 17. Further, the bottom part 15 is formed with a raised bottom portion 19 projecting inwardly of the container. Rigidity (buckling strength) of the heat-resistant container 10 is increased by the reinforcing portion 18 and the raised bottom portion 19 and thus deformation of the body part 13 or the bottom part 15 is prevented when contents such as mineral water are put into the heat-resistant container 10. Further, in the present embodiment, the shoulder part 14 of the heat-resistant container 10 is formed to be thicker than the thickness of the body part 12 and thus the rigidity of the heat-resistant container 10 is further increased.

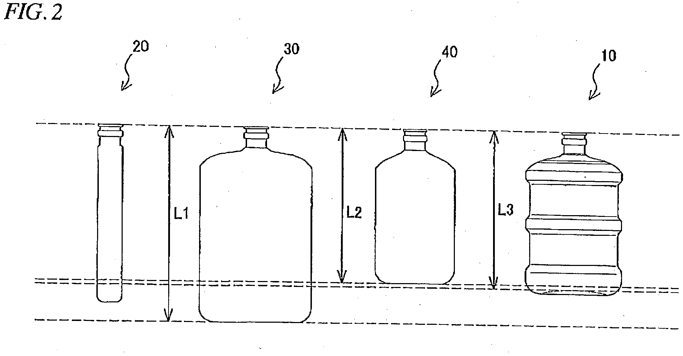

As shown in Fig. 2, such a heat-resistant container 10 is formed into a final shape through a preform 20 for a large-scale container (hereinafter, simply referred to as a "preform"), a primary blow-molded article 30 and an intermediate molded article 40.

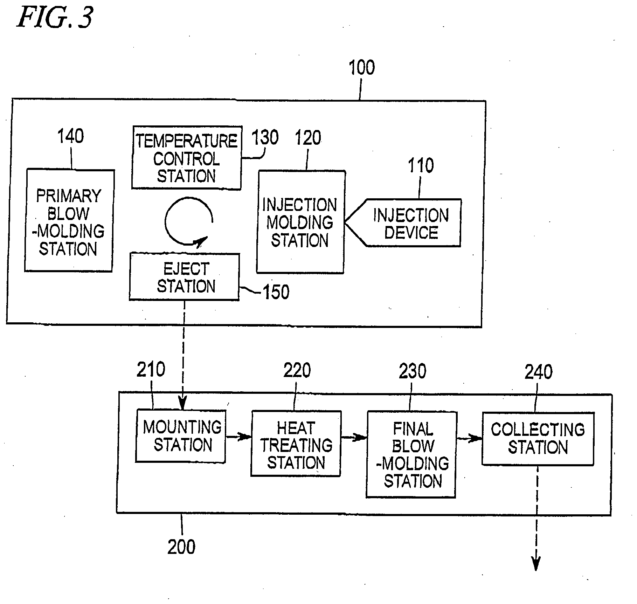

The preform 20 and the primary blow-molded article 30 can be formed using an existing injection stretch blow-molding device. Although a configuration of the existing injection stretch blow-molding device is not particularly limited, an injection stretch blow-molding device 100 includes an injection molding station 120 connected to an injection device 110, a temperature control station 130, a primary blow-molding station 140 and an eject station 150, as shown in Fig. 3, for example. The preform 20 injection-molded or the primary blow-molded article 30 primary blow-molded by the injection stretch blow-molding device 100 is rotationally conveyed at intervals of 90 degrees by a rotation table (not shown), for example, in a state where a neck part thereof is held. In this case, a known molding device can be employed as the injection stretch blow-molding device 100 and therefore a detailed description of each part is omitted.

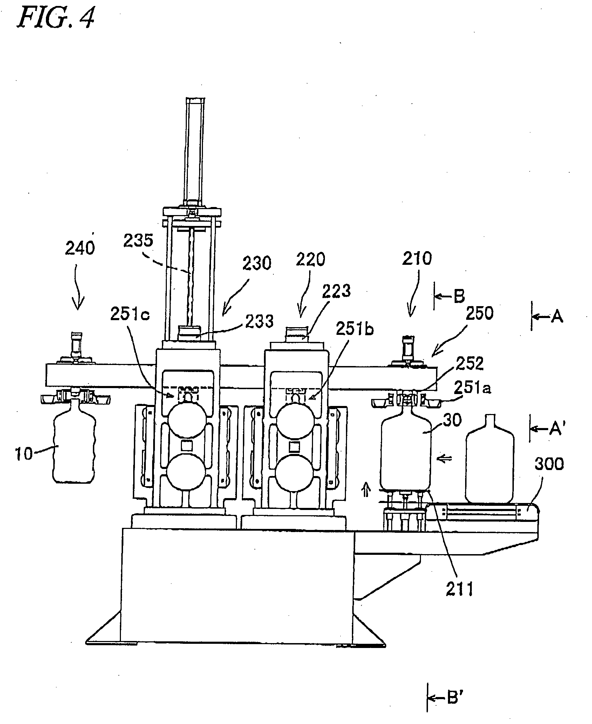

The primary blow-molded article 30 extracted from the eject station 150 of the injection stretch blow-molding device 100 is, for example, pooled once and supplied to a heat molding device 200 of the present invention by a movement unit 300 (see Fig. 4) such as a belt conveyor, in a state of being cooled to a room temperature.

As shown in Fig.3 and Fig. 4, the heat molding device 200 includes a mounting station 210, a heat treating station 220, a final blow-molding station 230 and a collecting station 240. Although described in detail later, the primary blow-molded article 30 supplied to the heat molding device 200 is heat-treated at the heat treating station 220 to form the intermediate molded article 40. The intermediate molded article 40 is molded at the final blow-molding station 230 to form the heat-resistant container 10. The primary blow-molded article 30, the intermediate molded article 40 and the heat-resistant container 10 as a final molded article are sequentially conveyed between the mounting station 210, the heat treating station 220, the final blow-molding station 230 and the collecting station 240 by a conveyance unit (conveyance device) 250 which is provided to be movable linearly.

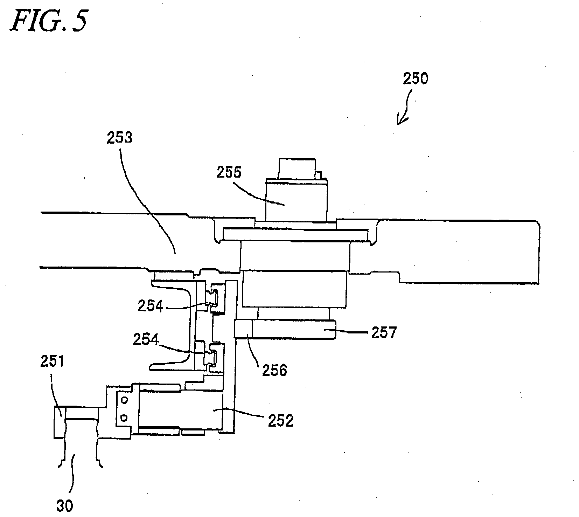

Here, the conveyance unit 250 includes a fixing member 252 to which a plurality of chucks 251 (grasping members) are fixed at predetermined intervals. The plurality of chucks configures a grasping unit for grasping a neck part of the primary blow-molded article 30, etc. As shown in Fig. 5, which is a view taken along an arrow A-A' of Fig. 4, the fixing member 252 is held in engagement with guide rails 254 fixed to a frame 253 and is configured to reciprocate linearly by a drive unit 255 such as a motor. That is, the fixing member 252 is provided with a rack 256 to which a pinion gear 257 is meshed. The pinion gear 257 is fixed to a rotating shaft (not shown) of the drive unit 255. A driving force of the drive unit 255 is transmitted to the fixing member 252 through the rack 256 and the pinion gear 257, etc., so that the fixing member 252 linearly reciprocates along the guide rails 254.

In the present embodiment, three first to third chucks 251a to 251c are fixed to the fixing member 252 at predetermined intervals from the mounting station 210 (see Fig. 4). Specifically, the mounting station 210, the heat treating station 220, the final blow-molding station 230 and the collecting station 240 are arranged at regular intervals and the first to third chucks 251a to 251c are respectively fixed to the fixing member 252 by the same intervals as the intervals between these parts. In Fig. 4, a chuck is shown also in a position corresponding to the collecting station 240. However, this shows a state where the third chuck 251c is moved to the collecting station 240.

In such a configuration of the present embodiment, when the first chuck 251a reciprocates between the mounting station 210 and the heat treating station 220, the second chuck 251b reciprocates between the heat treating station 220 and the final blow-molding station 230 and the third chuck 251c is reciprocates between the final blow-molding station 230 and the collecting station 240. Accordingly, since such a conveyance unit 250 is employed, it is possible to sequentially convey the primary blow-molded article 30 or the intermediate molded article 40 or the like from the mounting station 210 to the collecting station 240 just by reciprocating the fixing member 252 by a moving distance of the first chuck 251a between the mounting station 210 and the heat treating station 220.

Thereby, a distance of straightly moving each chuck 251 becomes extremely short. Accordingly, it is possible to reduce the size of the heat molding device 200 and therefore it is possible to install the heat molding device 200 even in a relatively small space.

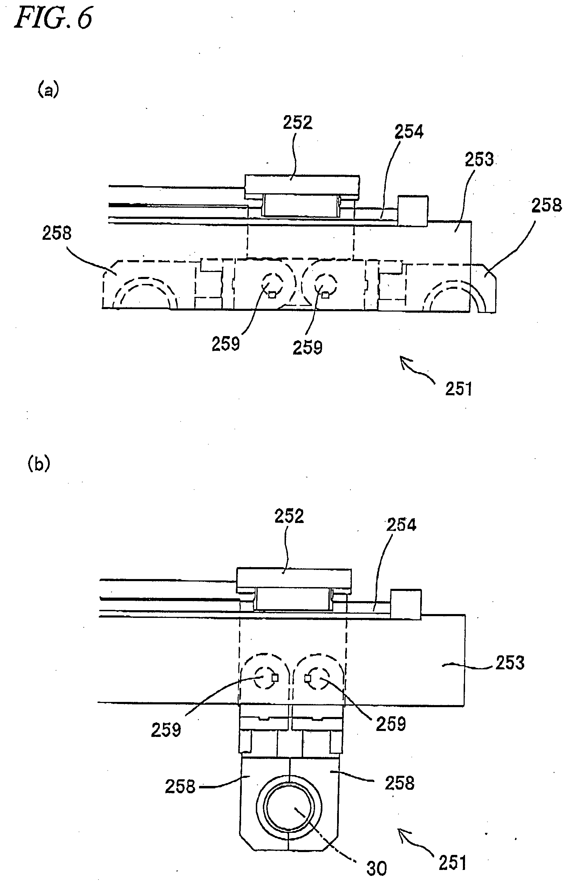

Further, each chuck 251 includes a pair of arms 258, as shown in Fig. 6. One end of each arm 258 is supported by the fixing member 252 by a supporting pin 259, respectively. And, these arms 258 can be pivoted with the supporting pin 259 being a pivot point by a turning unit (not shown) such as a motor. As shown in Fig. 6 (a), the arms 258 extend (opened by 180 degrees) along the guide rails 254, in a state where the primary blow-molded article 30, etc. is not grasped. When the arms 258 are closed as shown in Fig. 6 (b), the primary blow-molded article 30, etc. is grasped by these arms 258.

By employing such a chuck 251 as a grasping unit, it is possible to minimize an unwanted movement of the conveyance unit 250. Accordingly, it is possible to extremely simplify the structure of the conveyance unit 250 and thus it is possible to reduce the size of the heat molding device 200.

Hereinafter, the mounting station 210, the heat treating station 220, the final blow-molding station 230 and the collecting station 240 configuring the heat molding device 200 will be described.

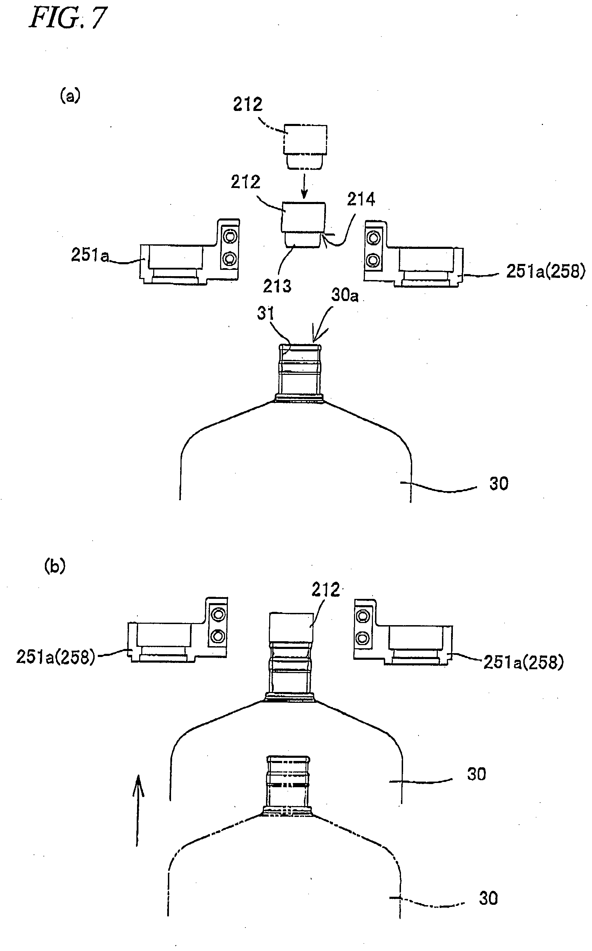

The mounting station 210 mounts the primary blow-molded article 30 supplied by the movement unit 300 on the conveyance unit 250. As shown in Fig. 4 and Fig. 7, the mounting station 210 includes a table 211 and a positioning pin 212. The table 211 is movable up and down by a lifting unit such as an actuator (not shown). The movement unit 300 is provided adjacent to the table 211 and the primary blow-molded article 30 supplied by the movement unit 300 is placed on the table 211.

The positioning pin 212 is provided to face substantially an opening 31 of the primary blow-molded article 30 placed on the table 211. When the primary blow-molded article 30 is mounted on the conveyance unit 250, the primary blow-molded article 30 is positioned by the positioning pin 212. Specifically, when the primary blow-molded article 30 is placed on the table 211, the positioning pin 212 is lowered to a predetermined position from a home position, as shown in Fig. 7 (a). Here, the home position of the positioning pin 212 is set to a position where the positioning pin does not inhibit the movement of the primary blow-molded article 30 or the like by the conveyance unit 250. Then, lifting of the primary blow-molded article 30 (the lifting of the table) is started. The lifting of the primary blow-molded article 30 (the lifting of the table) is stopped when the positioning pin 212 is fitted to the opening 31 of the primary blow-molded article 30, as shown in Fig. 7 (b). Thereby, the primary blow-molded article 30 is positioned in a desired position with high accuracy.

Here, the positioning pin 212 is provided at its leading end with a reduced diameter portion 213 having a diameter gradually decreasing toward a leading end. Thereby, even if a slight misalignment occurs between the opening 31 of the primary blow-molded article 30 and a center position of the positioning pin 212 in a state where the primary blow-molded article 30 is placed on the table 211, the misalignment is corrected by fitting the positioning pin 212 to the opening 31. That is, since the positioning pin 212 is fitted to the opening 31 of the primary blow-molded article 30, the primary blow-molded article 30 is positioned in a left-right direction (in-plane direction) with high accuracy.

Further, the positioning pin 212 is provided with a stepped portion 214 to which a leading end surface 30a of the primary blow-molded article 30 contacts. And, when the positioning pin 212 is fitted to the opening 31 of the primary blow-molded article 30 and thus the leading end surface 30a of the primary blow-molded article 30 contacts with the stepped portion 214 of the positioning pin 212, the lifting of the table 211 is stopped. That is, by the positioning pin 212 being fitted to the opening 31 of the primary blow-molded article 30, the primary blow-molded article 30 is also positioned in an up-down direction with high accuracy.

With the primary blow-molded article 30 being positioned with high accuracy in this manner, the arms 258 configuring the first chuck 251a are closed. In this way, an outer periphery of a neck part 32 of the primary blow-molded article 30 is grasped by the first chuck 251a. That is, the primary blow-molded article 30 is mounted on the conveyance unit 250.

Thereafter, the positioning pin 212 is moved (lifted) to the home position and therefore is disengaged from the primary blow-molded article 30. In this state, as the fixing member 252 is moved along the guide rails 254 by the drive unit 255, the primary blow-molded article 30 is conveyed to the heat treating station 220 from the mounting station 210.

Since the heat molding device 200 of the present invention includes the mounting station 210 as described above, the primary blow-molded article 30 manufactured in an existing injection stretch blow-molding device can be mounted on the conveyance unit 250 in a state where the primary blow-molded article 30 is positioned with relatively high-accuracy. Accordingly, it is possible to successfully convey the primary blow-molded article 30 to the heat treating station 220 from the mounting station 210.

Meanwhile, the second chuck 251b and the third chuck 251c are opened/closed in synchronization with the first chuck 251a. Accordingly, when a heat-treated intermediate molded article 40 is present in the heat treating station 220, the primary blow-molded article 30 is grasped by the first chuck 251a and the intermediate molded article 40 is grasped by the second chuck 251b. Further, when a final blow-molded heat-resistant container 10 is present in the final blow-molding station 230, the heat-resistant container 10 is grasped by the third chuck 251c. Then, the primary blow-molded article 30, the intermediate molded article 40 and the heat-resistant container 10, which are grasped by each chuck 251, are successfully conveyed at the same time.

In the heat treating station 220, the primary blow-molded article 30 is heat-treated in a heated heat-treating mold and then a heat-shrunk intermediate molded article 40 is obtained. First, as the primary blow-molded article 30 is conveyed to the heat treating station 220 by the conveyance unit 250, the first chuck 251a is opened and thus the primary blow-molded article 30 is accommodated in a heat-treating mold 221.

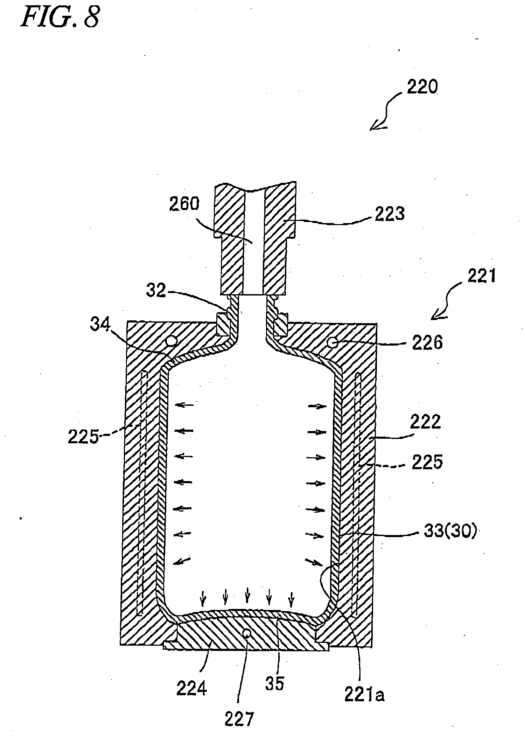

As shown in Fig. 8, the heat-treating mold 221 configuring the heat treating station 220 includes a heat treatment split mold 222 in which the primary blow-molded article 30 is accommodated, a blow core mold 223 which is brought into contact with a leading end surface (top face) of the primary blow-molded article 30 and a raised bottom heating mold 224 which corresponds to a bottom part 35 of the primary blow-molded article 30. A molding space of the heat-treating mold 221 has substantially the same shape as an outer shape of the primary blow-molded article 30. The heat treating station 220 is intended to remove distortion generated in the primary blow-molded article 30 and therefore it is preferable that the primary blow-molded article 30 is not subjected to stretch orientation by the heat treatment. Further, a plurality of (for example, twelve) rod-shaped heaters 225 are provided at a region of the heat treatment split mold 222 corresponding to a body part 33 of the primary blow-molded article 30. These heaters 225 are embedded at substantially equal intervals around the molding space of the heat treatment split mold 222 and the body part 33 of the primary blow-molded article 30 is heated to a predetermined temperature by these heaters 225.

Further, a supply path 226 for supplying temperature control medium such as heated oil, for example, is formed at a region of the heat treatment split mold 222 corresponding to a shoulder part 34 of the primary blow-molded article 30. Thereby, the body part 33 and the shoulder part 34 of the primary blow-molded article 30 can be heated to different temperatures by the heat treatment split mold 222. Further, the raised bottom heating mold 224 is also provided with a supply path 227 for supplying the temperature control medium.

The heat-treating mold 221 is preheated to a predetermined temperature. When the primary blow-molded article 30 is heat-treated, heating treatment (heat set treatment) is carried out by sending high-pressure air to the interior of the primary blow-molded article 30 and bringing the primary blow-molded article 30 into contact with an inner wall surface 221a of the heat-treating mold 221 for a predetermined time. And then, the intermediate molded article 40 is formed by exhausting the gas in the primary blow-molded article 30 and extracting the primary blow-molded article 30 from the heat-treating mold 221. That is, when the gas in the primary blow-molded article 30 is exhausted and the primary blow-molded article 30 is extracted from the heat-treating mold 221, the primary blow-molded article 30 is shrunk and therefore the intermediate molded article 40 is obtained which has a longitudinal length L2 shorter than a longitudinal length L1 of the heat-resistant container 10 as the final molded article (see Fig. 2).

The blow core mold 223 includes an air inlet path 260 to plug the opening of the primary blow-molded article 30 and to introduce the high-pressure air into the primary blow-molded article 30. Thereby, the blow core mold 223 serves as a nozzle for introducing the high-pressure air into the primary blow-molded article 30. Further, after the heat treatment is completed, the gas in the primary blow-molded article 30 is exhausted to the outside through the air inlet path 260 of the blow core mold 223.

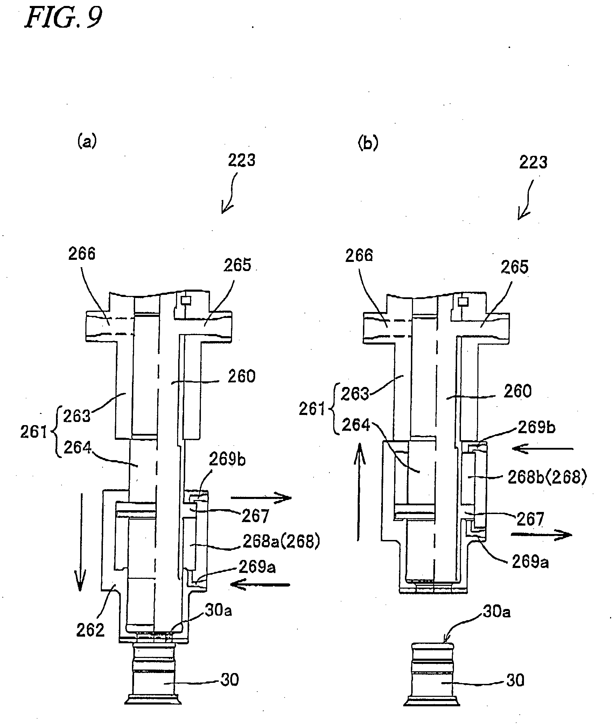

In the present embodiment, the blow core mold 223 includes a core mold body 261 and a sliding member 262 mounted on an outer peripheral surface of the core mold body 261, as shown in Fig. 9. The core mold body 261 includes a large-diameter portion 263 and a small-diameter portion 264 having a diameter smaller than the large-diameter portion 263. The large-diameter portion 263 is formed with the air inlet path 260 and also formed with an air supply port 265 and an air discharge port 266 which are communicated with the air inlet path 260. An air tank (not shown) is connected to the air supply port 265. The high-pressure air supplied from the air tank is introduced into the primary blow-molded article 30 through the air supply port 265 and the air inlet path 260. The air discharge port 266 is provided with a valve (not shown). As the valve is opened after the heat treatment is completed, the gas in the primary blow-molded article 30 is discharged to the outside through the air discharge port 266.

Further, the small-diameter portion 264 of the core mold body 261 is formed with a flange portion 267 having a diameter larger than the small-diameter portion 264. Meanwhile, the sliding member 262 is formed with a space 268 having a diameter substantially equal to the diameter of the flange portion 267. This space 268 is divided into a first space 268a and a second space 268b by the flange portion 267. Further, the sliding member 262 is provided with a first air supply and discharge port 269a communicating with the first space 268a and a second air supply and discharge port 269b communicating with the second space 268b.

As the air is supplied to the first space 268a or the second space 268b through the first air supply and discharge port 269a or the second air supply and discharge port 269b, the sliding member 262 is configured to slide along an outer peripheral surface of the small-diameter portion 264 of the core mold body 261.

Specifically, when the primary blow-molded article 30 is conveyed to the heat treating station 220 from the mounting station 210, air is supplied into the first space 268a through the first air supply and discharge port 269a. The sliding member 262 is lowered by air pressure of the supplied air and brought into contact with a leading end surface (top face) 30a of the primary blow-molded article 30 (Fig. 9 (a)). At this time, the air in the second space 268b is discharged to the outside through the second air supply and discharge port 269b. In this state, the high-pressure air is introduced into the primary blow-molded article 30 through the air supply port 265 and the air inlet path 260.

Further, when the heat treatment of the primary blow-molded article 30 is completed and thus the air in the primary blow-molded article 30 is discharged to the outside through the air inlet path 260 and the air discharge port 266, air is supplied into the first space 269b through the second air supply and discharge port 269b and the air in the first space 268a is discharged to the outside through the first air supply and discharge port 269a. In this way, the sliding member 262 is lifted and disengaged from the primary blow-molded article 30 (Fig. 9 (b)).

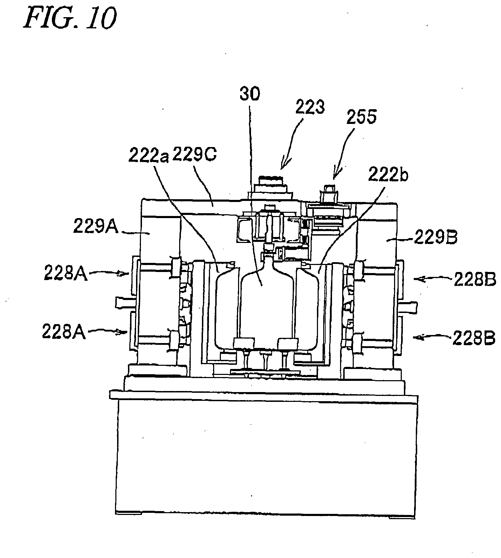

When the primary blow-molded article 30 is heat-treated, respective split molds of the heat treatment split mold 222 configuring the heat-treating mold 221 are pressed and sealed in a state where both of the split molds are brought into contact with each other. In the present embodiment, two first clamping unit 228A for clamping a first split mold 222a of the heat treatment split mold 222 and two second clamping unit 228B for clamping a second split mold 222b of the heat treatment split mold 222 are provided, as shown in Fig. 10 which is a view taken along an arrow B-B' of Fig. 4. These first and second clamping unit 228A and 228B are configured to press the heat treatment split mold 222 (228a, 228b) by a hydraulic pressure, for example, and built in a first frame 229A and a second frame 229B which are provided on the outside of each of the split molds 228a, 228b.

When the primary blow-molded article 30 is heat-treated as described above, the high-pressure air is sent to the interior of the primary blow-molded article 30. It is necessary that the heat treatment split mold 222 is firmly clamped so as not to be opened by the pressure of the high-pressure air.

In the present embodiment, the first frame 229A with the first clamping unit 228A fixed thereto and the second frame 229B with the second clamping unit 228b fixed thereto are integrated by a connection frame 229C provided at the upper end of these first and second frames 229A, 229B. Thereby, rigidity of the first and second frames 229A, 229B is increased. Accordingly, the first and second frames 229A, 229B are not deformed, even when a relatively high pressure is applied to the heat treatment split mold 222 by the first and second clamping unit 228A, 228B. Accordingly, it is possible to firmly clamp the heat treatment split mold 222. In the present embodiment, the same frame structure is also employed in the final blow-molding station 230.

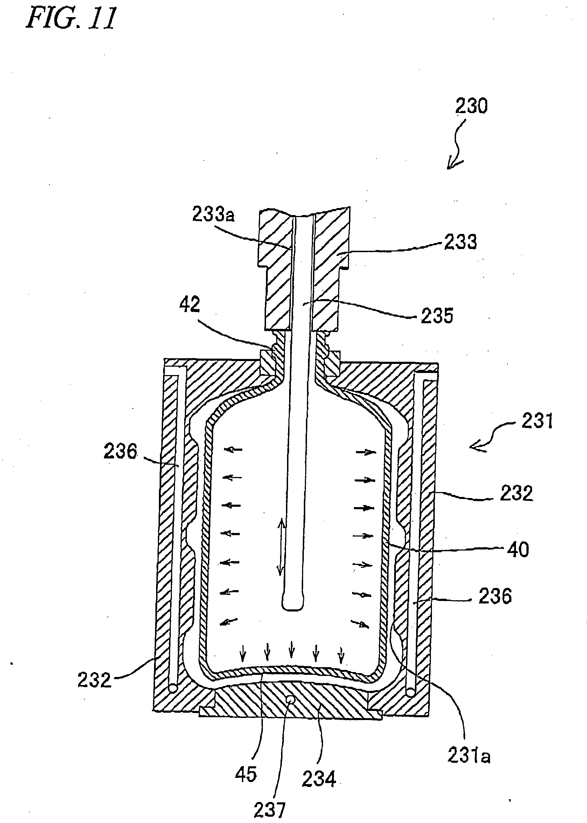

The intermediate molded article 40 extracted from the heat-treating mold 221 is grasped by the second chuck 251b and conveyed to the final blow-molding station 230. The final blow-molding station 230 includes a final blow-molding mold 231, as shown in Fig. 11. The final blow-molding mold 231 is preheated to a predetermined temperature. By blow-molding the intermediate molded article 40 in the final blow-molding mold 231, the heat-resistant container 10 as a final molded article is obtained.

Similarly to the above-described heat-treating mold 221, the final blow-molding mold 231 includes a final blow split mold 232 accommodating the intermediate molded article 40, a blow core mold 233 contacting with a leading end surface (top face) of the intermediate molded article 40, a raised bottom mold 234 corresponding to a bottom part 45 of the intermediate molded article 40 and a stretching rod 235 vertically movable through an air inlet path 233a of the blow core mold 233. Around a molding space of the final blow split mold 232, a plurality of supply paths 236 for supplying the temperature control medium are provided along a longitudinal direction. Further, the raised bottom mold 234 is also provided with a supply path 237 for supplying the temperature control medium. The intermediate molded article 40 in the molding space is heated to a predetermined temperature by the temperature control medium circulating in the plurality of supply paths 236.

The intermediate molded article 40 placed in the final blow-molding mold 231 is longitudinally and transversely stretched by the high-pressure air supplied therein and the stretching rod 235 and thus urged against an inner wall surface 232a of the final blow split mold 232, so that the intermediate molded article 40 is heat-treated to form the heat-resistant container 10 as a final molded article (see Fig. 1).

Further, in the present embodiment, after the heat-resistant container 10 is formed by the final blow-molding mold 231, cooling air is supplied into the heat-resistant container 10 through air holes provided at a leading end and a middle of the stretching rod 235. At this time, the air inside the heat-resistant container 10 is discharged to the outside through the air inlet path 233a provided in the blow core mold 233. Thereby, since the cooling air supplied from the stretching rod 235 circulates in the heat-resistant container 10, the entire heat-resistant container 10 is cooled effectively and relatively uniformly.

Further, in the present embodiment, the final blow split mold 232 configuring the final blow-molding station 230 and the heat treatment split mold 222 configuring the heat treating station 220 are arranged in parallel in a direction perpendicular to a mold clamping direction of theses molds. In this manner, the final blow split mold 232 and the heat treatment split mold 222 can be arranged in close proximity to each other while preventing the interference of both molds. Accordingly, it is possible to reduce the size of the heat molding device 200.

Thereafter, the heat-resistant container 10 which is a final molded article extracted from the final blow-molding mold 231 is grasped by the third chuck 251c and conveyed to the collecting station 240. In the collecting station 240, the third chuck 251c is opened and thus the heat-resistant container is removed from the conveyance unit 250. Although not shown, the collecting station 240 includes a positioning pin which is fitted to the opening 11 of the heat-resistant container 10, similarly to the positioning pin 212 of the mounting station 210. As the heat-resistant container 10 is conveyed to the collecting station 240, the positioning pin is lowered from a home position and thus fitted to the opening 11 of the heat-resistant container 10. In this state, the third chuck 251c is opened and thus the heat-resistant container 10 is removed from the conveyance unit 250. By fitting the positioning pin to the opening 11 of the heat-resistant container 10 in the collecting station 240 in this way, the heat-resistant container 10 can be effectively collected without being inclined. And then, the heat-resistant container 10 extracted from the heat molding device 200 is conveyed to a predetermined storage location by a movement unit (not shown) such as a belt conveyor, for example.

In this case, since the primary blow-molded article 30 is heated to a high temperature in the heat-treating mold 221 and also the intermediate molded article 40 is heated to a high temperature in the final blow-molding mold 231, theses molded articles (the primary blow-molded article 30 and the intermediate molded article 40) are in close contact to the inner wall surface of the heat-treating mold 221 or the final blow-molding mold 231. Accordingly, there is a risk that it is difficult to easily release the molded articles from the molds at the time of opening the molds. At this time, the chuck 251 configured by a pair of arms 258 alone cannot properly grasp the intermediate molded article 40 or the heat-resistant container 10 which is a final molded article and therefore positional deviation or falling phenomenon occurs. As a result, there occurs a situation where a successful grasp or convey becomes difficult.

As a countermeasure, it is desirable that the conveyance unit 250 includes a mechanism for reinforcing a holding force of the chuck 251. That is, it is desirable that the conveyance unit 250 includes a mechanism (restriction unit) which is engaged with an outer side of a pair of arms 258 grasping the molded article (neck part thereof) to restrict the opening of the pair of arms 258.

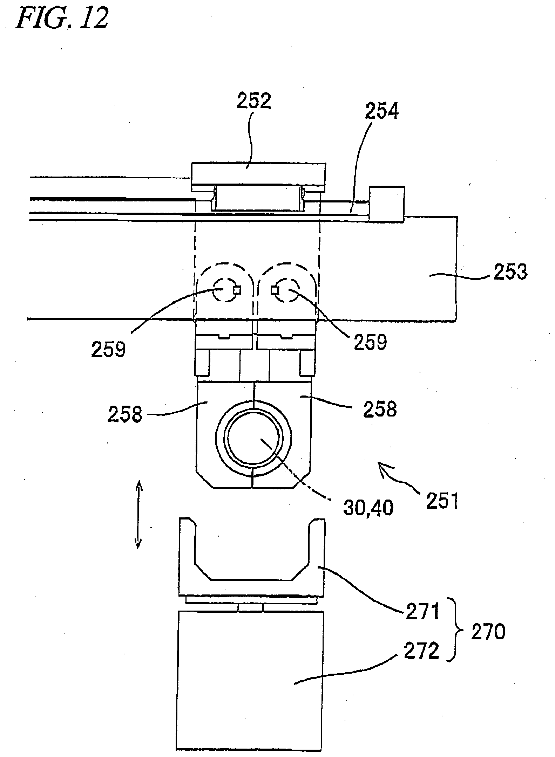

Specifically, for example, as shown in Fig. 12, a reinforcing mechanism 270 including a substantially U-shaped chuck reinforcing member 271 is provided in a position facing the pair of aims 258 configuring the chuck 251. In addition to the chuck reinforcing member 271, the reinforcing mechanism 270 includes an air cylinder 272. The chuck reinforcing member 271 is supported so as to move in a direction toward and away from the chuck 251 by the air cylinder 272.

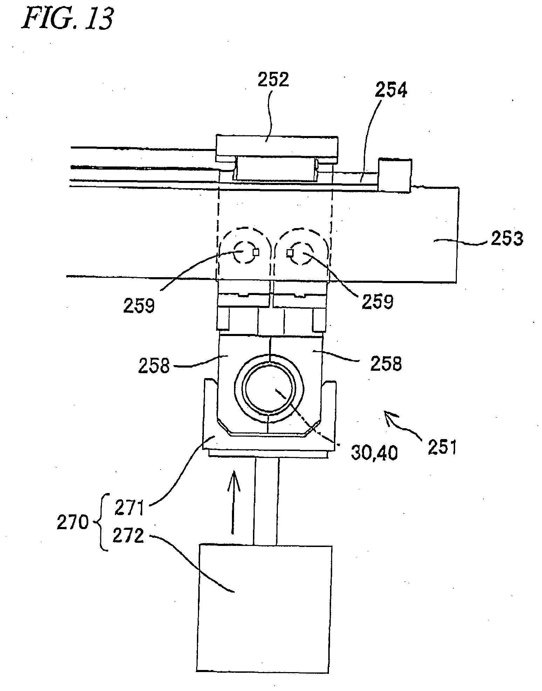

By providing such a reinforcing mechanism 270, the molded article can be more reliably grasped. For example, the molded article is grasped by the chuck 251, and then, the chuck reinforcing member 271 in a standby position is advanced and engaged with the pair of arms 258 as shown in Fig. 13. The molds are opened in this state where the pair of arms 258 is fixed so as not to be opened and then, the molded article is released from the molds. And then, the chuck reinforcing member 271 is retreated and returned to the original standby position. Thereafter, the molded article is conveyed to the final blow-molding station 230 or the collecting station 240 by the chuck 251, as described above. By doing so, even in a state where the molded article is difficult to be released from the molds, the molded article can be reliably grasped by the chuck 251 and conveyed.

According to the heat molding device of the present invention described above, it is possible to manufacture a heat-resistant container from a primary blow-molded article made of PET resin, which is formed by an existing injection stretch blow-molding device. That is, by employing the heat molding device of the present invention, the existing device can be used. Accordingly, capital investment can be suppressed to the minimum and thus it is possible to manufacture the heat-resistant container made of PET resin at a relatively low cost.

For example, as illustrated in the above-described embodiment, the heat molding device of the present invention is suitably applied in the manufacture of a large heat-resistant container. However, the heat molding device of the present invention may be applied in the manufacture of a small heat-resistant container, of course.

This application is based upon Japanese Patent Application (Patent Application No. 2010-168500) filed on July 27, 2010.

### Reference Signs List

- 10: Heat-Resistant Container
- 20: Preform
- 30: Primary Blow-Molded Article
- 40: Intermediate Molded Article
- 200: Heat Molding Device
- 210: Mounting Station
- 211: Table
- 212: Positioning Pin
- 220: Heat treating Station
- 228A: First Clamping Unit
- 228B: Second Clamping Unit
- 229A: First Frame
- 229B: Second Frame
- 229C: Connecting Frame
- 250: Conveyance Unit
- 251: Chuck
- 258: Arm

## Claims

1. A heat molding device for a heat-resistant container, which is configured to form the heat-resistant container by heat-treating and molding a primary blow-molded article obtained by primary blow-molding a preform made of polyethylene terephthalate resin, the heat molding device comprising:
a mounting station configured to mount the primary blow-molded article on a conveyance unit provided so as to be moveable linearly by lifting a table on which the primary blow-molded article is placed, fitting a positioning pin to an opening of a neck part of the primary blow-molded article, and grasping an outer periphery portion of the neck part by a grasping unit in a state where the primary blow-molded article is positioned;
a heat treating station configured to obtain an intermediate molded article by bringing the primary blow-molded article conveyed from the mounting station by the conveyance unit into contact with a heated heat treating mold and thus heat treating and molding the primary blow-molded article;
a final blow-molding station configured to obtain a heat-resistant container having a predetermined shape by final blow-molding the intermediate molded article conveyed from the heat treating station by the conveyance unit in a state where the intermediate molded article is brought into contact with a heated final blow-molding mold; and
a collecting station configured to collect the heat-resistant container conveyed from the final blow-molding station by the conveyance unit by removing the heat-resistant container from the conveyance unit.

2. The heat molding device for a heat-resistant container according to claim 1,
wherein the heat treating mold and the final blow-molding mold are arranged in parallel in a direction substantially perpendicular to a clamping direction of the molds.

3. The heat molding device for a heat-resistant container according to claim 1 or 2,
wherein the grasping unit includes three first to third grasping members fixed to a guide member at predetermined intervals from the mounting station side, and
wherein, when the first grasping member reciprocates between the mounting station and the heat treating station, the second grasping member is configured to reciprocate between the heat treating station and the final blow-molding station and the third grasping member is configured to reciprocate between the final blow-molding station and the collecting station.

4. The heat molding device for a heat-resistant container according to any one of claims 1 to 3,
wherein the grasping unit includes a pair of arms which can be pivoted by one end side thereof being a pivot point, and the outer periphery portion of the neck part is grasped between the pair of arms.

5. The heat molding device for a heat-resistant container according to claim 4,
wherein the conveyance unit further includes a restriction unit for restricting the opening of the pair of arms by being engaged with an outer side of the pair of arms grasping the neck part.

6. The heat molding device for a heat-resistant container according to any one of claims 1 to 5,
wherein the heat treating station and the final blow-molding station include first and second clamping unit for respectively clamping each of a pair of split molds configuring the heat-treating mold or the final blow-molding mold in a state where both split molds contact with each other, and
wherein a first frame with the first clamping unit fixed thereto and a second frame with the second clamping unit fixed thereto are integrated via a connection frame provided at an upper end portion of the first and second frames.

## Patentansprüche

1. Wärmeformvorrichtung für einen hitzebeständigen Behälter, welche ausgebildet ist,
den wärmebeständigen Behälter durch Wärmebehandlung und Formung eines primären Blasformkörpers zu bilden, der durch primäres Blasformen eines Vorformlings aus Polyethylenterephthalatharz erhalten wird, wobei die Wärmeformvorrichtung mit
einer Montagestation, welche ausgebildet ist, den primären blasgeformten Gegenstand zu tragen, und
einer Transporteinheit gebildet ist, welche linear beweglich vorgesehen ist, indem ein Tisch angehoben wird, auf dem der primäre blasgeformte Gegenstand platziert ist, wobei ein Positionierungsstift an einer Öffnung eines Halsteils des primären blasgeformten Artikels anbringbar ist und der äußere Umfangsabschnitt des Halsteils durch eine Greifeinheit in einem Zustand greifbar ist, in welchem der primäre blasgeformte Gegenstand positioniert ist; mit
einer Wärmebehandlungsstation, die ausgebildet ist, einen Zwischenformgegenstand zu bilden, indem der primäre blasgeformte Gegenstand, der von der Montagestation durch die Transporteinheit befördert wird, in Kontakt mit der erwärmten Wärmebehandlungsform bringbar ist und somit der primäre blasgeformte Gegenstand wärmebehandelbar und formbar ist;
einer finalen Blasformstation, mittels welcher ein hitzebeständiger Behälter mit einer vorbestimmten Form durch finales Blasformen des von der Wärmebehandlungsstation durch die Fördereinheit beförderten Zwischenformkörpers in einem Zustand, in dem der geformte Zwischenformkörpers mit einer beheizten Endblasform in Kontakt gebracht ist, erhaltbar ist; und
einer Sammelstation, welche ausgebildet ist, den hitzebeständigen Behälter, der von der finalen Blasformstation durch die Fördereinheit befördert wird, durch Entfernen des hitzebeständigen Behälters von der Fördereinheit zu sammeln.

2. Wärmeformvorrichtung für einen hitzebeständigen Behälter nach Anspruch 1,
**dadurch gekennzeichnet,**
**dass** die Wärmebehandlungsform und die finale Blasformstation parallel in einer Richtung angeordnet sind, die im Wesentlichen senkrecht zu einer Einspannrichtung der Formen ist.

3. Wärmeformvorrichtung für einen hitzebeständigen Behälter nach einem der Ansprüche 1 oder 2,
**dadurch gekennzeichnet,**
**dass** die Greifeinheit drei erste bis dritte Greifelemente aufweist, die an einem Führungselement in vorbestimmten Abständen von der Seite der Montagestation aus befestigt sind, und dass, wenn sich das erste Greifelemente zwischen der Montagestation und der Wärmebehandlungsstation hin und her bewegt, das zweite Greifelement so ausgebildet ist, dass es sich zwischen der Wärmebehandlungsstation und der finalen Blasformstation hin- und her bewegt, und das dritte Greifelement so konfiguriert ist, dass es sich zwischen der finalen Blasformstation und dem Sammelstation hin- und her bewegt.

4. Wärmeformvorrichtung für einen hitzebeständigen Behälter nach einem der Ansprüche 1 bis 3,
**dadurch gekennzeichnet,**
**dass** die Greifeinheit ein Paar von Armen aufweist, welche an einer Endseite schwenkbar ist, die ein Schwenkpunkt aufweist, und dass der äußere Umfangsabschnitt des Halsteils zwischen dem Armpaar gehalten wird.

5. Wärmeformvorrichtung für einen hitzebeständigen Behälter nach Anspruch 4,
**dadurch gekennzeichnet,**
**dass** die Fördereinheit ferner eine Beschränkungseinheit zum Begrenzen der Öffnung des Armpaars umfasst, indem sie mit einer Außenseite des Armpaars in Eingriff steht, die den Halsabschnitt umgreift.

6. Wärmeformvorrichtung für einen hitzebeständigen Behälter nach einem der Ansprüche 1 bis 5,
**dadurch gekennzeichnet,**
**dass** die Wärmebehandlungsstation und die finalen Blasformstation erste und zweite Klemmeinheiten zum jeweiligen Einspannen jeweils eines von einem Paar geteilter Formen aufweist, welche die Wärmebehandlungsform oder die finale Blasform-Form bilden, in dem beide geteilten Formen einander berühren, und dass ein erster Rahmen mit der ersten Klemmeinheit daran und ein zweiter Rahmen mit der zweiten Klemmeinheit daran über einen Verbindungsrahmen integriert sind, welcher an einem oberen Endabschnitt des ersten und des zweiten Rahmens vorgesehen ist.

## Revendications

1. Dispositif de moulage à chaud pour un récipient résistant à la chaleur, configuré pour former le récipient résistant à la chaleur par traitement thermique et moulage d'un article primaire moulé par soufflage obtenu par moulage par soufflage préliminaire d'une préforme en résine de polyéthylène téréphtalate, le dispositif de moulage à chaud comprenant :
une station de montage configurée pour monter l'article primaire moulé par soufflage sur une unité de transport fournie de sorte à pouvoir se déplacer linéairement en soulevant une table sur laquelle l'article primaire moulé par soufflage est placé, en installant une tige de positionnement sur une ouverture d'un goulot de l'article primaire moulé par soufflage, et en saisissant une partie périphérique du goulot par une unité de saisie lorsque l'article primaire moulé par soufflage est positionné ;
une station de traitement thermique configurée pour obtenir un article intermédiaire moulé en mettant l'article primaire moulé par soufflage transporté depuis la station de montage par l'unité de transport en contact avec un moule de traitement thermique chauffé et en traitant thermiquement et moulant ainsi à chaud l'article primaire moulé par soufflage ;
une station de moulage par soufflage final configurée pour obtenir un récipient résistant à la chaleur possédant une forme prédéterminée par un moulage par soufflage final de l'article intermédiaire moulé transporté depuis la station de traitement thermique par l'unité de transport lorsque l'article intermédiaire moulé est mis en contact avec un moule de moulage par soufflage final chauffé ; et
une station de collecte configurée pour collecter le récipient résistant à la chaleur transporté depuis la station de moulage par soufflage final par l'unité de transport en retirant le récipient résistant à la chaleur de l'unité de transport.

2. Dispositif de moulage à chaud pour un récipient résistant à la chaleur selon la revendication 1,
dans lequel le moule de traitement thermique et le moule de moulage par soufflage final sont disposés en parallèle dans une direction sensiblement perpendiculaire à une direction de serrage des moules.

3. Dispositif de moulage à chaud pour un récipient résistant à la chaleur selon la revendication 1 ou 2,
dans lequel l'unité de saisie comporte trois premier à troisième organes de saisie fixés sur un organe guide à des intervalles prédéterminés depuis le côté de la station de montage, et
dans lequel, lorsque le premier organe de saisie alterne entre la station de montage et la station de traitement thermique, le deuxième organe de saisie est configuré pour alterner entre la station de traitement thermique et la station de moulage par soufflage final et le troisième organe de saisie est configuré pour alterner entre la station de moulage par soufflage final et la station de collecte.

4. Dispositif de moulage à chaud pour un récipient résistant à la chaleur selon l'une quelconque des revendications 1 à 3,
dans lequel l'unité de saisie comporte une paire de bras pivotant par un côté d'une de ses extrémités étant un point pivot, et la partie extérieure périphérique du goulot est saisie entre la paire de bras.

5. Dispositif de moulage à chaud pour un récipient résistant à la chaleur selon la revendication 4,
dans lequel l'unité de transport comporte en outre un unité de restriction pour restreindre l'ouverture de la paire de bras en étant en prise avec un côté externe de la paire de bras saisissant le goulot.

6. Dispositif de moulage à chaud pour un récipient résistant à la chaleur selon l'une quelconque des revendications 1 à 5,
dans lequel la station de traitement thermique et la station de moulage par soufflage final comportent une première et une deuxième unité de serrage pour le serrage respectif de chaque moule d'une paire de moules divisés configurant le moule de traitement thermique ou le moule de moulage par soufflage final lorsque les deux moules divisés sont en contact l'un avec l'autre, et
dans lequel un premier cadre sur lequel est fixée la première unité de serrage et un deuxième cadre sur lequel est fixé la deuxième unité de serrage sont intégrés par le biais d'un cadre de raccordement fourni sur une partie d'extrémité supérieure des premier et deuxième cadres.
